# EUROPEAN PATENT APPLICATION

(11) **EP 3 369 507 A1**
(43) Date of publication of application: **05.09.2018**
(21) Application number: 15907165.3
(22) Date of filing: 28.10.2015
(51) Int. Cl.: B23D 21/10, B26D 3/16

(54) **SCISSORS FOR CUTTING TUBES**

(30) Priority: 27.10.2015 ES 201531538
(71) Applicant: Zenten Bernhard Groten, S.L., 20300 Irún (Guipúzcoa) (ES)
(72) Inventor: GROTEN, Alberto, 20300 Irún (Guipúzcoa) (ES); AIZPURUA EGAÑA, Manuel, 20300 Irún (Guipúzcoa) (ES); EIZAGUIRRE BENGOETXEA, Martín, 20300 Irún (Guipúzcoa) (ES)
(74) Representative: Gil-Vega, Victor
(86) International application number: PCT/ES2015/070776
(87) International publication number: WO 2017/072370

(57) **Abstract**

The invention relates to scissors for cutting tubes, in particular tubes which are multilayer and/or protected with a protective coating, said scissors having two arms (1,2), with a first part in the formo f a head (1.1, 2.1) and a second part in the formo f a handle (1.2, 2.2), including a first cutting system base don a Blade (3) housed in a fixed manner in the head of one of the arms and a hole for housing a tuve in the head of the other arm; and a second outwardly projecting cutting system arranged in the handle-shaped lower part (1.2, 2.2) and formed by independent cutting elements (6) arranged in pairs on each of the handles (1.2, 2.2) and facing each other two-by-two.

## Description

The present invention relates to a set of scissors for cutting pipes, more particularly pipes of the type intended for sanitary and heating facilities.

Sanitary and heating facilities habitually use different types of pipes or tubes. Normally, these tubes must be protected and insulated. Thus, from a general point of view, multi-layer tubes can be found in the market, comprising different structural layers made of different plastic materials, usually polyethylene (PE), and metal layers, normally made of aluminium, as well as intermediate adhesive layers to bring cohesion to the assembly, where the pipe itself is already an isolating and protector one; and pipes protected by means of an additional protecting coating, including an undulated or corrugated coating.

There are different cutting tools available in the market for the cutting of these different types of pipes. Usually they consist of pliers-type tools, where the cutting head essentially comprises a blade facing an opposite supporting means intended to house the pipe to be cut. However, these cutting tools, generically known as pipe cutters, have a number of drawbacks when used to cut multi-layer or coated pipes, among them the irregular cuts obtained as a result of the non-plastic nature of the metal layer of these pipes, since it has not the capability of plastically recovering itself after undergoing a deformation. Thus, during the installation of pipes, different cutting tools are required, depending of the type of pipe to be cut.

For instance, documents WO2010123622 and WO2007076956 describe multifunction pipe cutting tools comprising different functional cutting groups based on blades and teeth arranged within a single tool.

The scissors for cutting pipes according to this invention comprise two differentiated cutting units arranged as one single tool, that are intended for the cutting of both conventional plastic pipes and multi-layer and coated pipes, so that it can be easily used in plumbing and heating facilities, besides many other benefits. Among said benefits, its ease of use should be highlighted, since it requires to apply a lower force to allow the blades of the different cutting units to penetrate in the pipe, while simultaneously reducing the deformation of the multilayer or coated pipe induced by the tangential crushing of the blades against the pipe.

The scissors for cutting pipes according to the present invention essentially comprise two scissor arms, with a first upper head section and a second lower section, which is used as a handle, wherein the head section of one of the arms comprises a blade which is securely housed inside it, and the head of the other arm comprises a recess, located opposite to the said blade, which is intended for housing the pipe to be cut, and the whole assembly forms a first cutting system.

At the lower part, as a kind of handle, both scissor arms comprise a second cutting system which extends outwards from one of the surfaces of the scissors. This second cutting system comprises four independent cutting elements arranged in pairs on each one of the handles, facing each other in twos. The said cutting elements comprise a cylindrical support which houses an assembly comprised by the relevant cutting blades, the guiding discs and rings and the blade protections.

Both arms are articulated by means of a sandwich-type pivoting system incorporated into one of the scissor arms, wherein the said pivoting system is connected to the other scissor arm by means of a support which is bolted to said other arm, and wherein the pivoting system is concealed.

The invention will be described below based on an embodiment of said invention and with reference to the accompanying drawings, in which:
- Fig. 1A:: Upper general plan view of an embodiment of the scissors according to the invention;
- Fig. 1B:: General plan view, seen from below, of the embodiment shown in Fig. 1A, where the lid concealing the pivoting system has been removed;
- Fig. 2A:: Top view of a scissor arm according to Fig. 1;
- Fig. 2B:: Bottom view of a scissor arm according to Fig. 1;
- Fig. 3:: Detailed view of the head which houses the pipe to be cut;
- Fig. 4:: Scissor arm showing the second cutting system;
- Fig. 5:: Detailed view of the second cutting system according to Fig. 4;
- Fig. 6:: Detailed view of the cutting elements according to Fig. 5.

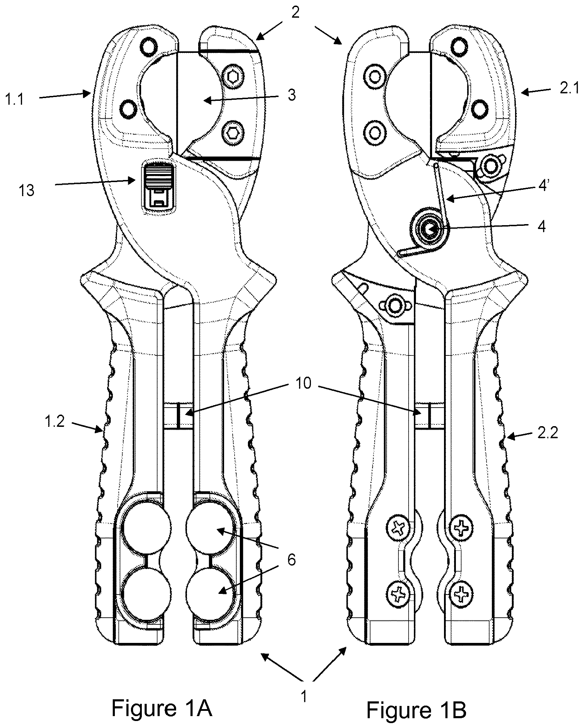

As shown in figures 1A and 1B, the scissors for cutting pipes according to the invention comprise two scissor arms (1, 2), with a first upper head section (1.1, 2.1) and a second lower section which is used as a handle (1.2, 2.2), wherein the head section of one of the arms, which is marked with (2) in the figure, comprises a blade (3) securely housed inside the said head, and the head of the other arm comprises a recess which is intended to house the pipe to be cut and which is opposite to, and facing the said blade, forming a first cutting system.

Particularly regarding Figure 1B, the scissor arms (1, 2) are articulated by means of a sandwich-type pivoting system housed inside one of the scissor arms, which in the Figure is marked with (2), wherein the pivoting system is connected to the other arm of the scissors (1) by means of a support bolted to the said other arm, which remains concealed. As it can be appreciated in the figure, the pivoting system comprises a shaft (4) one of whose ends is securely housed within the appropriate housing of the scissor arm. To facilitate the relative movement of the scissor arms, the shaft (4) rotates around a needle roller, which is housed within a socket embedded in the arm, thereby forming a needle roller assembly. The pivoting system is completed by means of a torsion spring (4') which allows the opening of the scissors from the closed position, thus facilitating its handling.

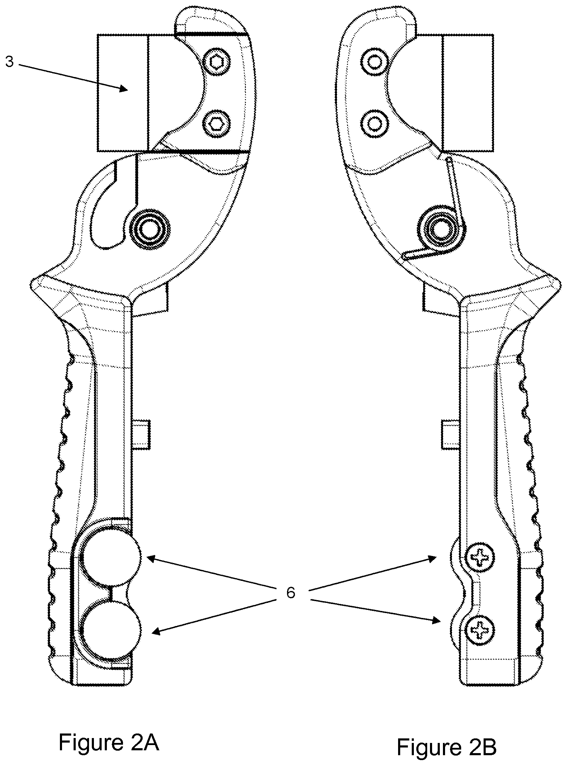

As it can be appreciated in Figures 2A and 2B, the said first cutting system comprises a blade (3) securely housed within the head (2.1), through the appropriate fixing means, for instance, the relevant screws and sockets.

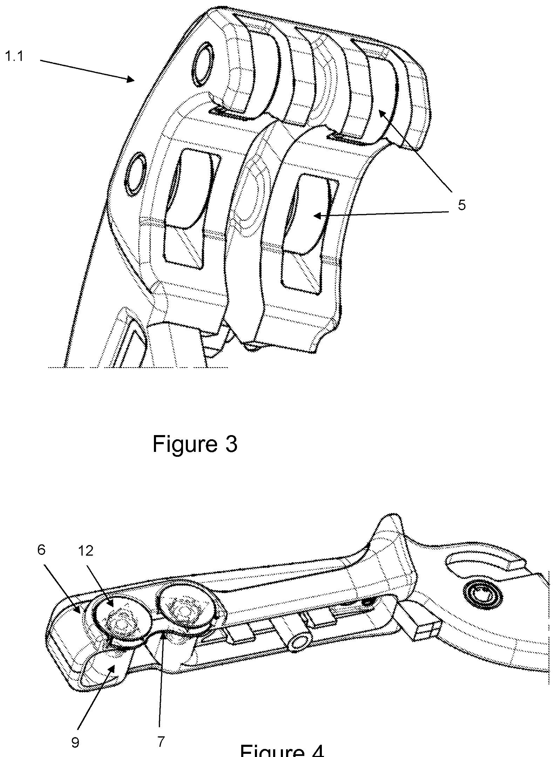

Now referring to Figure 3, and located opposite to the blade (3), a symmetric set of supports is located inside the head (1.1) where the pipe to be cut is housed. In the embodiment shown in the figure, these supports comprise two pairs of rollers (5) with rotation axes transversely arranged relative to the longitudinal axis of the head, thus obtaining a squared apex arrangement, which supports and facilitates the cutting of the pipe when the blade (3) is operated. These supports allow that the pipe to be cut rotates against the blade (3), which facilitates the penetration of said blade within the pipe, thereby minimising its deformation due to tangential crushing as a result of the pressure exercised against the blade and reducing the force required for the insertion of the blade (3) in the pipe at the beginning of the cutting operation. In a preferred embodiment of the invention, where the supports have been configured as rollers (5), the said rollers comprise needle roller assemblies (not shown) to facilitate the rotation around their axis and thus the rotation of the pipe during the cutting operation.

Referring again to figures 1A and 1B, in the lower section, used as a handle (1.2, 2.2), both scissor arms (1, 2) comprise a second cutting system which projects outwards relative to one of the surfaces of the scissors which, in Figure 1A, is the outer surface thereof. This second cutting system comprises four independent cutting elements (6) arranged in pairs on each one of the handles, facing each other in twos. The said cutting elements (6) comprise a cylindrical support (9) which houses an assembly consisting of the relevant cutting blades (11), as well as the guiding discs and rings and the blade protections.

Since this second cutting system is symmetrically arranged in the lower part of the handle sections (1.2, 2.2), the said second cutting system will be described, for the sake of clarity, only with regard to one of the handles (1.2, 2.2), as the arrangement corresponding to the other handle of the scissor arm is identical, and is symmetrically arranged relative to the longitudinal axis of the scissors.

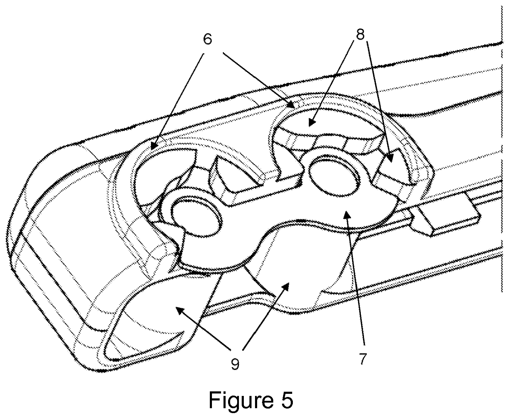

As it can be appreciated in figures 4 and 5, this second cutting system incorporated into both scissors handles (1.2, 2.2) comprises, for instance in the case of the handle (2.2), a pair of independent cutting elements (6) whose axis is perpendicular to the scissors plane.

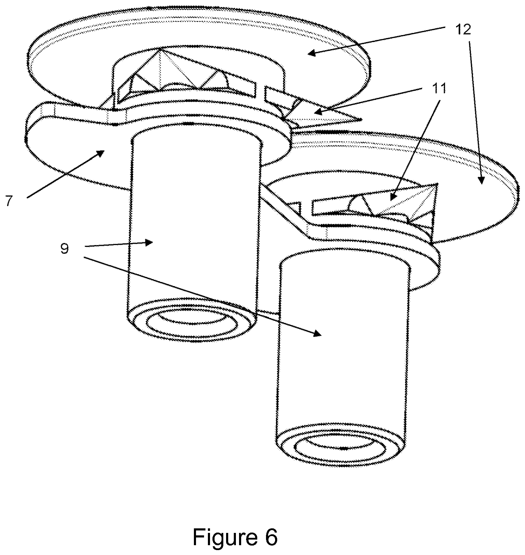

Especially referring to Figure 6, each cutting element (6) comprises a cylindrical support (9) connected to the scissors handle (2.2) through the appropriate means, for instance, by screwing. Each cylindrical support (9) comprises cutting blades (11) secured to its longitudinal axis and perpendicularly arranged relative to such axis.

The said cutting blades (11) have a regular closed polygonal shape, defined by a central angle α. The geometrical layout of the blades is not subject to any limitation as to its shape, and triangle-shaped blades (α = 120°) can be used, but they can be also squared (α = 90°), pentagonal (α = 72°), etc. The geometrical shape of the blade (11) allows that only one of the apexes of said geometrical shape is used during the cutting operation, and consequently, when the blade edge (11) is worn, it is not necessary to replace it, but only to rotate the blade in an angle α for instance 120° in the case of triangular geometries, or 90° in the case of a squared geometry, so that the unused part of the blade edge is subsequently used, thereby increasing the working life of the scissors according to the invention.

At the upper end of the cylindrical support (9), and located above the cutting blade (11), the cutting element (6) includes a guiding element in the shape of a circular plate (12) slightly greater in size than the working range of the blade (11). This guiding element (12) performs a twofold function of protecting the geometry of the blade (11) and guiding the second cutting system during operation, as the circular plate (12) penetrates in one of the valleys of the corrugated pipe to be cut by means of the rotation of the scissors according to the invention.

Below the cutting blades (11), and attaching each pair of cutting elements (6) among them, there is a double ring (7) which also facilitates the alignment of an undulated or corrugated pipe which is to be cut, so that it engages the valleys of the pipe undulation and allows a clean cut. As shown in figure 6, the double ring (7) is of the same size as the circular plates (12), and consequently, this double ring (7) is used to protect the blade edges (11).

The handle (1.2, 2.2) comprises a double recess of an essentially semicircular shape, of a size and shape appropriate for the cutting elements (6), which is designed to house each pair of cutting elements (6), as well as supporting plates (8) for such cutting elements.

As shown in figure 5, the second cutting system is projected outwards relative to the upper surface of the scissors, so that it may cleanly cut, an undulated or corrugated pipe which has been already installed, flush to the wall.

Optionally, the scissors according to the invention comprise a safety lock (13) which prevents the accidental opening of the scissor arms (1, 2) in a conventional manner, as well as closing stops (10) located at the relevant handles (1.2, 2.2).

In an embodiment of the invention, the blades (3, 11) are coated with a tetrapolyfluoroethylene layer, to reduce the force required to cut the multilayer pipe, especially those with a thicker metal core.

## Claims

1. Scissors for cutting pipes, especially multilayer pipes and pipes protected with an additional protecting coat, such as an undulated or corrugated coating, of the type comprising two scissor arms (1, 2), with a first upper head section (1.1,2.1) and a second, lower section, which is used as a handle (1.2, 2.2), **characterized in that** it comprises
a first cutting system comprising a blade (3) securely housed inside the head of one of the arms and, opposite to such blade (3), a recess intended to house a pipe to be cut in the head of the other arm, such other head including a symmetrical set of supports (5) inside it;
a second cutting system located in the lower section, which is used as a handle, (1.2, 2.2) of both scissor arms (1, 2), which projects outwards relative to one of the scissor surfaces, consisting of four independent cutting elements (6), comprising blades (11), arranged in pairs on each one of the handles (1.2, 2.2) and facing each other in twos.

2. Scissors for cutting pipes according to claim 1, **characterized in that** the scissor arms (1, 2) are articulated by means of a sandwich-type pivoting system incorporated into one of the scissor arms, wherein the said pivoting system is connected to the other scissor arm (1) by means of a support which is bolted to said other arm, concealing the pivoting system.

3. Scissors for cutting pipes according to claim 2, **characterized in that** the pivoting system comprises a shaft, (4) one of whose ends is securely housed within the appropriate housing of the scissor arm, and the shaft (4) rotates around a needle roller, which is housed within a socket embedded in the arm, thereby forming a needle roller assembly, and the pivoting system is completed by means of a torsion spring (4') which allows the opening of the scissors from the closed position.

4. Scissors for cutting pipes according to claim 1, **characterized in that** the supports (5) are arranged as rollers, comprising needle roller assemblies with rotation axes arranged perpendicularly to the longitudinal axis of the head.

5. Scissors for cutting pipes according to claim 1, **characterized in that** the cutting elements (6) comprise:
cylindrical supports (9) that house cutting blades (11) perpendicularly arranged and which have a regular closed polygonal shape, defined by a central angle α;
guiding elements (12) in the form of a circular plate, located above the cutting blades (11), slightly greater in size than the working range of the blade (11); and
a double ring (7) located below the cutting blades (11), of the same size as the circular plates (12) and which is used to attach each pair of cutting elements (6).

6. Scissors for cutting pipes according to claim 5, **characterized in that** only one of the apexes of the blade (11) is used during the cutting operation, and such apex may be replaced by another adjacent one, by simply rotating the blade (11) in an angle α.

7. Scissors for cutting pipes according to claim 1, **characterized in that** the blades (3, 11) are coated with a tetrapolyfluoroethylene layer.
